Europäisches Patentamt

(19) European Patent Office

Office européen des brevets

(11) Publication number: **0 106 446**
**A1**

# (12) EUROPEAN PATENT APPLICATION

(21) Application number: 83304629.5

(22) Date of filing: 10.08.83

(51) Int. Cl.³: **F 16 L 13/00**
**F 16 L 55/16, F 16 B 4/00**
**H 02 G 15/18**

(30) Priority: 20.10.82 US 435539

(43) Date of publication of application:
25.04.84 Bulletin 84/17

(84) Designated Contracting States:
BE CH DE FR GB IT LI NL SE

(71) Applicant: RADIATION DYNAMICS INC.
316 South Service Road Melville
Long Island, New York 11746(US)

(72) Inventor: Bradley, Richard
56 Forte Avenue
Medford New York 11763(US)

(72) Inventor: Stine, Clifford R.
112 Dyke Road
Setauket New York 11733(US)

(74) Representative: Hayward, Denis Edward Peter et al,
Lloyd Wise, Tregear & Co. Norman House 105-109 Strand
London WC2R OAE(GB)

(54) **Heat shrinkable tubular closure sleeve.**

(57) A heat shrinkable tubular closure sleeve (204) having a riveted longitudinal seam. The sleeve (204) is formed from a sheet (100) comprising two longitudinal margin portions (102, 104) having a strip (120) of oriented, heat shrinkable material therebetween. Specifically, the two margin portion (102, 104) are overlapped and joined by rivets (202), each rivet (202) passing through a hole (106, 114) in each of the overlapping margin portions (102, 104). Each margin portion (102, 104) comprises a laminate (108) having a metal layer (130) sandwiched between two plastic layers (132, 134) which do not shrink when heat is applied. Placing the tubular sleeve (204) over a cylindrical article (200) and applying heat to the sleeve (204), the strip (120) shrinks to reduce the radius of the sleeve (204) to effectuate a tight wrap around the article (200).

Fig 1

Fig 3

EP 0 106 446 A1

-1-

This invention relates to a heat shrinkable tubular closure sleeve having a riveted longitudinal seam.

Various patents of the prior art discuss numerous contexts in which a wraparound closure sleeve may be used. In U.S. Patent No. 3,379,218 to Conde, use of a closure sleeve is discussed with reference to cables, pipes, and the like. Such sleeves can be used for repair purposes, for purposes of protecting an elongated article from the environment, for purposes of strengthening an enclosed article, or for other purposes. In the Conde patent, the sleeve includes a heat recoverable tubular structure all of which is shrinkable. The tubular structure is formed by providing a button-and-buttonhole longitudinal seam.

In U.S. Patent No. 3,574,313 to Tanaka, a heat shrinkable wraparound sleeve is formed from a sheet which includes tabs along one longitudinal edge and complementary slots along the opposite longitudinal edge. In forming the sleeve, the tabs are inserted into the slots and folded to form a longitudinal closure.

The disadvantages of both the Conde patent and the Tanaka patent are highlighted in U.S. Patent No. 4,268,559 to Smuckler. First, it is therein noted that the buttons and buttonholes in the Conde patent and the tabs and slots in the Tanaka patent are "constructed of the same material as the heat shrinkable portion". Thus, when "the sleeve is heated to soften the heat shrinkable portion...the buttonholes and buttons may soften sufficiently so that the closure might fail." In addition, other problems--such as one button unbuttoning while others are being buttoned in the closure device taught in the Conde patent--are also discussed.

Also cited in the Smuckler patent is U.S. Patent No. 3,455,336 to Ellis. The sleeve disclosed in the Ellis patent includes an elongated metal channel having a C-shaped cross-

2

0106446

longitudinal edges of the sleeve.  As the channel is slid along the ridges, successive portions of the ridges are brought together to form a longitudinal closure.  Smuckler, in his patent, notes that the channel becomes more difficult to slide as the length of the closure increases. Further, it is noted that the channel protrudes radially outward from the sleeve itself, which in various applications might represent a further disadvantage.

A discussion is also set forth of a patent to Wilson (U.S. Patent No. 3,530,898) in which closure is effected by passing a metal rod through longitudinally disposed loops.  The disadvantages of forming the loops and feeding a rod through the loops are noted as serious disadvantages.

The Smuckler patent, in effect, provides a survey of prior technology wherein the heat shrinkable tubular sleeve is provided with some type of longitudinal seam or closure.  Specifically, the Smuckler patent recognises the shortcomings of the various prior devices which rely on mechanical couplings to longitudinally seam a tubular closure sleeve.

After reviewing the various disadvantages of the prior art, the Smuckler patent teaches an adhesive bond to form a longitudinal closure.

According to the present invention, there is provided a sheet formable into a substantially tubular sleeve for enclosing a substantially cylindrical object, the sheet comprising:

two longitudinal margin portions; and

a strip of heat shrinkable material extending therebetween;

wherein each margin portion has a plurality of holes disposed therein along the length of said margin portion and wherein each of at least some of the holes in one of the margin portions aligns with a matching hole in the other margin portion when the two margin portions overlap in a prescribed manner.

The invention further provides a substantially tubular closure sleeve adapted to form a wrapping around a cylindrical article, the sleeve comprising:

two margin portions extending along the axial direction of the sleeve; (a) one margin portion overlapping the other margin portion; (b) each margin portion having a plurality of holes defined therein along the length of said margin portion; and (c) each of at least some of the holes in one of the margin portions being aligned with a matching hole in the other margin portion;

a strip of heat shrinkable material extending between the margin portions; and

a plurality of fasteners, each fastener extending through a pair of matched, aligned holes to couple the two margin portions together.

In the preferred embodiment, a heat shrinkable tubular closure sleeve has a longitudinal seam formed by rivets passing through each of two marginal portions extending longitudinally along opposite sides of a flat sheet used in forming the sleeve.

Each marginal portion has holes therealong which can be aligned with holes in the other marginal portion when the two marginal portions overlap each other. Rivets, or other fasteners, _____

4

pass through the aligned holes to couple the marginal portions together to form a longitudinal seam. The bending and folding required by various prior techniques is obviated by the present invention, as is any difficult requirement of threading a rod through a series of loops or of placing tabs into slots. Hence, it is an object of the invention to provide a mechanical means for longitudinally seaming a heat shrinkable tubular closure that is relatively simple to fabricate and apply.

The margin portions may include laminate structures into which the fasteners are placed. The laminate structures do not shrink when heat is applied, unlike the closure devices in the Conde patent and Tanaka patent which teach shrinkable closures. The laminate structures preferably include a metal layer sandwiched between two plastic layers. The invention thus has as another object the eliminating of the problem of a softened closure when heat is applied.

The fabrication of the preferred embodiment, it is noted, is particularly facilitated when the sheet, which is formed into the sleeve with the riveted seam, is produced by extrusion. In this way, the laminate structures and a heat shrinkable strip therebetween are easily, inexpensively, and integrally producible.

The Conde patent, at column 3, line 68, noted that "a substantial shearing force is exerted on the buttons and the buttonholes when the sleeve is recovered." The attendant structural requirements imposed on the Conde buttonholes are essentially obviated by the present invention in that the laminate structures of the margin portions do not recover but remain fixed in dimensions.

The laminate structure of one margin portion may overlap the laminate structure of the other margin portion. Specifically, one plastic layer of one laminate structure abuts a plastic layer of the other laminate structure. By forming the plastic layers of a fusible bond plastic, heat applied to either or both of the abutting layers can effectuate a supplemental bond in addition to the rivet coupling.

A technique according to the invention will now be explained in more detail, by way of example, with reference to the accompanying drawings, in which:-

Figure 1 is a top view illustration of a sheet formable into a tubular closure sleeve.

Figure 2 is a side view illustration of the sheet shown in Figure 1 taken along line 2-2.

Figure 3 is an end view of a tubular closure sleeve longitudinally seamed with longitudinally spaced rivets.

Figure 4 is a cross-section view of a laminate structure of a margin portion through which rivets are fastened.

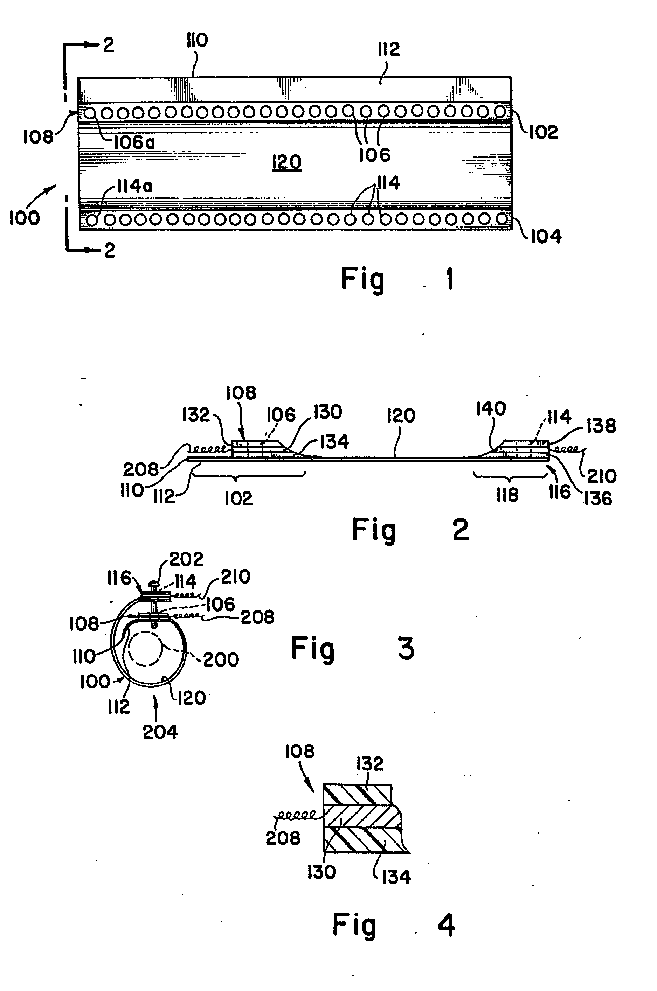

In Figure 1, a flat sheet 100 is shown. The sheet 100 includes two margin portions 102 and 104. The margin portion 102 has a first plurality of holes 106 extending therethrough, the holes 106 being arranged along the length of the sheet 100.

Referring to Figure 2, it is noted that the holes 106 pass through a laminate structure 108 of the margin portion 102. Extending from the laminate structure 108 toward the longitudinal edge 110 is an edge flat 112.

Referring to both Figures 1 and 2, holes 114 are shown passing through a laminate structure 116 of a margin portion 118. Extending between the margin portion 102 and the margin portion 118 is a strip 120 of heat shrinkable material.

Turning again to Figure 2, it is noted that the laminate structures 108 and 116 are basically similar in form. Accordingly, both will be discussed with reference to laminate structure 108.

The laminate structure 108 includes a layer of metal 130 sandwiched between two layers of plastic 132 and 134. Preferably, the plastic of at least layer 132 of laminate structure 108 and layer 136 of laminate structure 116 are heat fusible. The plastic of the layers 132 through 138 may be either unoriented heat shrinkable or not heat shrinkable material.

In the former case, fabrication is facilitated where the sheet 100 is formed by extrusion. That is, the heat shrinkable strip 120 and the two margin portions 102 and 118 are simultaneously extruded with a thin, maleable metal ribbon being introduced into the margin portions 102 and 118 to form the laminate structures 108 and 116, respectively.

The metal may be almost any metal, such as aluminum, capable of being extruded into thin ribbons. Preferably the metal is coated with an acrylate polymer film to enhance bonding to the plastic. A metal acrylate coated tape that may be used in this context is the commercially available Dow Zeta Bond tape. The plastic is preferably a polyolefin as is known in the art.

After the sheet 100 is formed, preferably by extrusion, the strip 120 is irradiated and oriented. This orienting will have a component of stretch transverse to the length of the sheet 120. Preferably, the stretch is orthogonal to the length of the sheet 120. With this type of stretching, the sheet 100 when formed as a tubular sleeve will shrink to reduce the radius of the sleeve.

It is to be noted that the margin portions 102 and 118 are not irradiated or oriented and, hence, do not shrink with the application of heat. Because of the metal layer 130 inserted between layers 132 and 134, shrinking is further prevented.

After the irradiation and orienting, the holes 106 and 114 are drilled or punched, the diameter of the holes 106 and 114 corresponding to the size of hand-applied rivets (see Figure 3) or such other fasteners which pass through two aligned holes.

Referring now to Figure 3, the sheet 100 is shown wrapped around an article 200 which is elongated and may be cylindrical in shape. (The article 200 may be a circular cylinder or may have a square or other multi-sided or other closed-curve cross-section.) The sheet 100 is shaped so that holes 106 in the laminate structure 108 align with holes 114 in the laminate structure 116. A rivet 202 is applied through the aligned holes. Preferably, the aligned holes are opposite each other, like holes 106a and 114a. Also preferably, each hole 106 is matched in size and shape and aligned with a corresponding hole 114.

After the rivets 202 are applied, heat is applied to the longitudinally seamed tubular sleeve 204. The strip 120 shrinks to reduce the radius of the sleeve 204. As the sleeve 204 tightens around the article 200, the seam remains closed and does not soften. The laminate structures 108 and 116 are, at this time, abutting each other, the layer 132 of laminate structure 108 being positioned radially inward relative to the abutting layer 136 of the laminate structure 116.

By making the layers 132 and 136 heat fusible, one can provide heater wires 208 and 210 which can connect to the metal layers 130 and 140, respectively, or to the plastic layers 132 and 136, or both. By directing current into the wires 208 and 210, heat is transferred to the abutting plastic layers 132 and 136 which then fuse or bond together.

In Figure 4, the laminate structure 108 is shown enlarged. The layers 132 and 134 may be 40 mms. thick while the layer 130 may be 20 mms. thick. The wire 208 is, preferably, a nichrome wire and may be imbedded in the plastic layers directly if desired. Depending on the heat generated by the wire 208, the wire 210 may not be required.

CLAIMS:-

1. A sheet formable into a substantially tubular sleeve for enclosing a substantially cylindrical object, the sheet comprising:

two longitudinal margin portions; and

a strip of heat shrinkable material extending therebetween;

wherein each margin portion has a plurality of holes disposed therein along the length of said margin portion and wherein each of at least some of the holes in one of the margin portions aligns with a matching hole in the other margin portion when the two margin portions overlap in a prescribed manner.

2. The apparatus according to claim 1 wherein each margin portion comprises:

a laminate structure including a metal layer sandwiched between an inner plastic layer and an outer plastic layer neither plastic layer shrinking with the application of heat; the holes in each margin portion extending through the laminate structure thereof.

3. The apparatus according to claim 1 or claim 2 wherein the two marginal portions are substantially parallel.

4. The apparatus according to claim 1 or 2 or 3 wherein the strip comprises an element oriented uniformly in a direction transverse to the lengths of both margin portions.

0106446

5. A substantially tubular closure sleeve adapted to form a wrapping around a cylindrical article, the sleeve comprising:

two margin portions extending along the axial direction of the sleeve; (a) one margin portion overlapping the other margin portion; (b) each margin portion having a plurality of holes defined therein along the length of said margin portion; and (c) each of at least some of the holes in one of the margin portions being aligned with a matching hole in the other margin portion;

a strip of heat shrinkable material extending between the margin portions; and

a plurality of fasteners, each fastener extending through a pair of matched, aligned holes to couple the two margin portions together.

6. The apparatus according to claim 5 wherein the strip comprises an element oriented to provide shrinkage of the tubular closure sleeve in at least the radial direction in response to the application of heat thereto.

7. The apparatus according to claim 5 wherein each fastener comprises a rivet.

8. The apparatus according to claim 6 wherein each margin portion comprises:

a laminate structure including a metal layer sandwhiched between the inner plastic layer and an outer plastic layer neither plastic layer shrinking with the application of heat; the holes in each margin portion extending through the laminate structure thereof.

9. The apparatus according to claim 8 wherein the margin portions and strip comprise an extruded, integral structure.

10. The apparatus according to claim 8 wherein a first one of the margin portions further comprises an edge flap extending in the axial direction of the sleeve;

the laminate structure of said first margin portion being disposed between the edge flap and the strip of heat shrinkable material.

11. The apparatus according to claim 10 wherein the outer plastic layer of the laminate structure of the inner margin portion abuts the inner plastic layer of the laminate structure of the outer margin portion.

12. The apparatus according to claim 11 further comprising:

a heater element coupled to apply heat to the abutting layers of the laminate structures; and

wherein the abutting layers comprise heat fusible plastic which form a bond in response to the application of heat thereto.

Fig 1

Fig 2

Fig 3

Fig 4

European Patent
Office

**EUROPEAN SEARCH REPORT**

Application number

| | DOCUMENTS CONSIDERED TO BE RELEVANT | | EP 83304629.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | DE - A1 - 2 912 722 (SIGMAFORM CORPORATION) <br> * Fig. 1-3 * <br> -- | 1,3,4, 5,6 | F 16 L 13/00 <br> F 16 L 55/16 <br> F 16 B  4/00 <br> H 02 G 15/18 |
| A | FR - A1 - 2 200 471 (TRIEB P.) <br> * Fig. 7,8 * <br> -- | 1,5,7 | |
| A | GB - A - 2 085 538 (KABEL- UND METALLWERKE GUTEHOFFNUNGSHÜTTE AG) <br> * Totality * <br> -- | 1,3 | |
| A | EP - A1 - 0 052 476 (UBE INDUSTRIES LTD.) <br> * Fig. 1-3 * <br> -- | 1,12 | |
| | | | TECHNICAL FIELDS SEARCHED (Int. Cl. ³) |
| A | DE - B2 - 1 947 057 (COMPAGNIE FRANCAISE DES ISOLANTES ANCIENS) <br> * Fig. 8,11 * <br> -- | 1,7 | F 16 L 13/00 <br> F 16 L 21/00 <br> F 16 L 25/00 <br> F 16 L 47/00 |
| A | EP - A1 - 0 056 080 (SIEMENS AG) <br> * Claim 2; fig. 2 * <br> -- | 1 | F 16 L 55/00 <br> F 16 L 59/00 <br> F 16 B  4/00 |
| A | DE - A1 - 2 835 102 (SIEMENS AG) <br> * Fig. 3 * <br> ---- | 1 | H 02 G 15/00 |

The present search report has been drawn up for all claims

| Place of search | Date of completion of the search | Examiner |
|---|---|---|
| VIENNA | 20-12-1983 | SCHUGANICH |